# EUROPEAN PATENT SPECIFICATION

(11) **EP 0 290 150 B1**
(45) Date of publication and mention of the grant of the patent: **13.12.1995**
(21) Application number: 88303319.3
(22) Date of filing: 13.04.1988
(51) Int. Cl.: C08F 4/62

(54) **Polymerisation catalyst**
Polymerisationskatalysator
Catalyseur de polymérisation

(30) Priority: 13.04.1987 GB 8708810
(43) Date of publication of application: 09.11.1988
(73) Proprietor: BASF Aktiengesellschaft, 67063 Ludwigshafen (DE)
(72) Inventor: Sampson, Roy John, Guisborough Cleveland (GB); Kelland, John William, Nunthorpe Middlesbrough Cleveland (GB)

(56) References cited:
- DE-A- 2 146 688
- GB-A- 2 143 834

## Description

The present invention relates to polymerisation catalysts, their preparation and use and to the polymerisation of ethylenically unsaturated monomers.

Transition metal compositions have been used as components of olefin polymerisation catalyst systems for many years. Compositions of this type containing titanium have been found to be especially useful, in particular for the production of polypropylene having a high stereoregularity. In recent years, considerable effort has been directed to the production of compositions which result in catalyst systems of high polymerisation activity coupled with high stereospecificity in the production of polypropylene. A catalyst system satisfying these requirements offers a propylene polymerisation process in which the removal of catalyst residues and undesirable atactic polymer is not necessary since the product of the the polymerisation process has a suitably low level both of catalyst residues and atactic polymer. To reduce the cost of the polymerisation process it has been proposed to effect the polymerisation in the essential absence of inert polymerisation diluents. In such processes, the polymerisation is effected in the monomer in the liquid phase or in the gas phase as the reaction medium. A gas phase polymerisation process is particularly demanding in respect of the catalyst performance, that is catalyst activity and stereospecificity.

Most recent developments in seeking improved catalyst performance have been directed to transition metal compositions in which a transition metal compound is reacted with a compound which may be regarded as functioning primarily as a support for the transition metal compound. There have been many proposals of systems in which titanium tetrachloride is reacted with magnesium chloride and a Lewis Base compound. Many techniques of effecting the reaction have been proposed and a wide range of Lewis Base compounds, or mixtures of Lewis Base compounds, have been used. Many of the prior art procedures disclose either the use of magnesium chloride as one of the starting materials or appear to generate magnesium chloride during the preparation of the transition metal composition. There is also considerable emphasis on the use of "active" magnesium chloride. Recent disclosures which refer to "active" magnesium chloride include, inter alia, European Patent Applications Publication No 45975, 45976, 45977, 86471, 86472 and 106141. The characterisation of "active" magnesium chloride varies slightly but in essence an "active" magnesium chloride is one which has a surface area of at least 3m²/g and/or has an X-ray diffraction pattern in which the most intense diffraction line in the spectrum of magnesium chloride of surface area one m²/g had been broadened or shifted.

Other proposals include GB 2143834 A in which a fatty acid salt of magnesium such as magnesium stearate, is reacted with a titanium halide in the presence of a halogenated hydrocarbon in the preparation of a propylene polymerisation catalyst and GB 1315768 A (equivalent to DE 2146688 A) in which an ethylene polymerisation catalyst is the combination of an organometallic activator and the reaction product of a hydrated or moist carboxylate salt of a divalent metal with a halogen containing compound of a group IVA, VA OR VIA transition metal.

We have now found that transition metal compositions derived from certain magnesium carboxylates show superior properties as catalyst components to other transition metal compositions when used with particular Lewis bases.

According to the present invention there is provided a polymerisation catalyst which comprises
(A) the reaction product of
   (i) a compound of a transition metal of Group IVA, VA or VIA of the Periodic Table with a
   (ii) magnesium compound of the general formula

      Mgₓ[R(COO)_{y}]z

      wherein
      R contains a cyclic group which comprises an aromatic or heterocyclic ring and
      x, y and z are integers such that
      $\text{yz = 2x}$ and
   (iii) a Lewis Base (I) of the general formula

      R¹ₐ Ar (COOR²) _{b}

      wherein
      Ar is a residue of an aromatic hydrocarbon;
      R¹ is a hydrocarbon radical, a halohydrocarbon radical, a halogen atom a group OR³ and is preferably a hydrogen atom or an alkyl group having at most 10 carbon atoms
      R² is a hydrocarbon radical or a halohydrocarbon radical; which is preferably an alkyl group having at most 10 carbon atoms
      R³ is a hydrocarbon radical or a halohydrocarbon radical preferably having 1 to 4 carbon atoms ;
      a is zero or an integer;
      b is an integer
   (B) an organic compound of aluminium and/or a metal of group IIA of the periodic table and
   (C) a Lewis Base compound which is an organic silicon compound containing one or more Si-OR⁴, Si-OCOR⁴ or Si-NR⁴ bonds, wherein
      R⁴ is a hydrocarbon radical which may be substituted with one or more halogen atoms and/or oxyhydrocarbon groups.

Preferably the composition contains at least one transition metal atom for every 15 atoms of magnesium, such as 9 magnesium atoms to one transition metal atom.

All references herein to the Periodic Table are to the Short Periodic Table as set out inside the back cover of "General and Inorganic Chemistry" by J R Partington, Second Edition, published by MacMillan and Company Limited, London, 1954.

For convenience hereafter, the term "transition metal" will be used to mean a transition metal of Group IVA, VA or VIA of the Periodic Table. The term "magnesium carboxylate" will be used hereafter to mean a magnesium compound of the general formula

Mgₓ[R(COO)_{y}]_{z}.

The value of y is preferably from 1 to 6 and we have obtained useful results using magnesium carboxylates in which the value of y is one.

In the group or groups [R(COO)_{y}] the, or each, carboxylate group may be attached directly to a ring carbon atom of the group R. The group R may be a single aromatic ring which may be substituted by for example OH, C₁ to C₄ alkyl groups or alkoxy groups having 1 to 4 carbon atoms or may be a polyaromatic group such as a fused ring system or one containing linked rings as in, for example, a diphenylene radical (C₆H₅.C₆H₄). The group R also may be a heterocyclic group such as a pyridyl or pyrrolyl group. The group R may be substituted with aliphatic groups , hydrocarbonoxy groups or halogen atoms.

The group Ar typically is a mono- or divalent residue derived from an aromatic hydrocarbon such as benzene or naphthalene. If the group Ar is a divalent residue it may be, for example, a divalent benzene residue wherein the unoccupied valencies are in the ortho- or para-position to each other.

The, or each, group R¹, when present, is typically a hydrocarbon radical or a group OR³, especially an alkyl or alkoxy group, particularly one containing up to 10 carbon atoms, for example an alkyl or alkoxy group containing 1 to 6 carbon atoms such as a methyl, ethyl, butyl or methoxy group.

It is preferred that at least one of the groups R² is a hydrocarbon radical. If the value of b is greater than one, the groups R² may be the same or different, for example one group R² may be a hydrogen atom and at least one group R² is a hydrocarbon radical, particularly an alkyl group. The group R² is preferably an alkyl group containing up to 10 carbon atoms and it is especially preferred that the alkyl group contains at least 4 carbon atoms, for example ethyl, n-propyl and especially n-butyl, iso-butyl or 2-ethylhexyl groups.

The value of b is at least one but preferably does not exceed two. The value of a can be zero and it is generally preferred that the value of (a+b) does not exceed two. Especially preferred are those compounds in which the value of b is two and the groups (COOR²) are in the ortho-position to each other. Compounds of the general formula.

R¹ₐ Ar (COOR²)_{b}

include methyl, ethyl and butyl benzoate, 4-methoxybenzoic acid, ethyl 4-methoxybenzoate, methyl 4-methylbenzoate and especially the mono-and di- esters of phthalic acid such as diethylphthalate, di-n-propyl phthalate and particularly di-n-butyl phthalate, di-iso-butyl phthalate and di-2-ethylhexyl phthalate.

Suitable organic silicon compounds include dialkyl dialkoxy silanes, preferably di₁₋₁₀ alkyl dimethoxysilanes.

Other organic silicon compounds which may be used include phenyltriethoxysilane, diphenyldiiso-butoxysilane, diphenyldimethoxysilane and iso-butyl-triethoxysilane.

The transition metal is preferably titanium. It is particularly preferred that the transition metal compound used to obtain the transition metal composition (A) is a titanium tetrahalide, especially titanium tetrachloride.

The magnesium carboxylate may be a salt of a substituted aromatic carboxylic acid such as 4-methylbenzoic acid or 4-methoxybenzoic acid. However, we have obtained satisfactory results using magnesium benzoate.

Thus, as a preferred aspect, the transition metal composition (A) of the present invention is the reaction product of titanium tetrachloride Lewis base (I) and a magnesium compound of the general formula

Mgₓ[R(COO)_{y}]_{z}

where R, x, y and z are all as defined herein.

Preferred transition metal compositions (A) in accordance with the present invention contain titanium, magnesium and chlorine and are active and stereospecific when used together with Compounds (B) & (C) for the polymerisation of an olefin monomer such as propylene.

The production of the transition metal composition (A) as hereinbefore described comprises the step of reacting, at a temperature of at least 50°C, a compound of a transition metal of Group IVA, VA or VIA of the Periodic Table with a magnesium compound of the general formula

Mgₓ[R(COO)_{y}]_{z.}

The reaction is preferably effected by suspending the magnesium carboxylate in a liquid medium which is, or which contains, a transition metal compound especially a titanium chloride.

The reaction with the transition metal compound may be effected in one or more stages. The, or each, reaction stage is effected at a temperature, of at least 50°C, which is preferably at least 75°C. The reaction temperature may be as high as the boiling temperature of the liquid medium. Thus, if reaction is effected in undiluted titanium tetrachloride under ambient pressure, the temperature can be as high as about 136°C, but in general a temperature of up to 110°C is preferred, for example about 100°C. Particularly useful results are obtained using a reaction temperature of from 80°C up to 90°C. The reaction is preferably effected for a total time, of all reaction stages, of at least 0.5 hours and typically at least two hours. The reaction time preferably does not exceed a total of 100 hours and in general is less than 50 hours, typically two to 50 hours. The proportion of the transition metal compound which is used is preferably at least one mole for each mole of the magnesium carboxylate and it is especially preferred to use a molar excess of the transition metal compound relative to the magnesium carboxylate.

The magnesium compound may be ground prior to effecting the reaction with the transitional metal compound. The grinding may be carried out in any suitable grinding apparatus such as, for example, a rotating ball mill or a vibrating ball mill. The grinding is preferably carried out in the substantial absence of oxygen or moisture.

The grinding conditions will be dependent on the grinding technique and on the material, or materials, being ground. However, in general it is preferred to carry out the grinding for a period of from 1 hour up to 5 days particularly from 5 up to 80 hours. Any suitable temperature may be used for the grinding, for example, from -50°C up to 100°C, especially from -10°C up to 80°C, and, if desired, the temperature may be varied during the grinding operation. The grinding may be carried out without applying heating or cooling to the pulverising appartatus. However, the conditions of grinding are generally such that heat is generated during the grinding and hence, in order to operate at an essentially constant temperature, for example ambient temperature, which is the generally desired procedure, it may be necessary to apply cooling to the grinding apparatus. The need for cooling will be dependent on the mill size and the milling conditions.

The intensity of grinding will be dependent upon the type of grinding apparatus which is being used. Using a rotating ball mill, it is preferred that the mill is rotated at between 50% and 90% of the critical speed. By critical speed is meant the speed at which particles are held by centrifugal force against the walls of the mill and do not tumble. Using a vibration mill, the mill is preferably operated to give an acceleration of between 12 and 200 metres per sec². Since the vibration mill gives a more intensive grinding, a shorter time of grinding is generally possible using such a mill than when a rotating ball mill is used.

The magnesium compound may be ground alone or together with other materials such as the Lewis Base compound and/or titanium tetrachloride. All of the reagents may be present at the start of the grinding or may be added sequentially with a period of grinding, for example about one day of grinding, between each addition. Thus, the magnesium compound may be added first, ground, for a period of time a Lewis Base compound added, and the mixture ground.

The magnesium compound may be ground with a transition metal compound such as titanium tetrachloride. However, the proportion of the transition metal compound used in such a grinding is preferably such that there is little or no liquid phase present during the grinding, and furthermore the temperature of grinding is generally below 50°C. Generally, at least one further stage is desirable subsequent to the grinding to produce the desired product, this further stage being as hereinbefore defined. During any grinding stage it is preferred that, if a transition metal compound is added, the proportion of the added transition metal compound does not exceed 50% molar of the magnesium compound for example about 33% molar of the magnesium salt.

The Lewis Base (I) is an aromatic ester and especially is an ester of phthalic acid. The magnesium carboxylate may be contacted with the Lewis Base (I) before effecting the reaction with the transition metal compound. The Lewis Base (I) may be used in an amount of up to 5 moles for each mole of the magnesium compound. In general it is preferred that the proportion of the Lewis Base (I) does not exceed one mole, and is especially not more than 0.5 mole, for example about 0.33 mole for each mole of the magnesium carboxylate.

The Lewis Base (I) may be contacted with the magnesium carboxylate during any grinding stage which is effected. Alternatively, the Lewis Base (I) may be contacted, without grinding, with a ground or unground magnesium carboxylate. The contacting may be effected by suspending the magnesium carboxylate in a solution of the Lewis Base (I) in a suitable solvent and agitating the mixture for a period of time which is preferably at least 0.5 hours but generally does not exceed 10 hours, for example 1 to 4 hours. Suitable solvents for effecting the contacting are aliphatic and aromatic hydrocarbons or chlorohydrocarbons such as 1,2-dichloroethane. If the contacting is effected using a solution of the Lewis Base I, contacting is preferably effected at a temperature of at least 50°C and preferably at least 75°C. The contacting may be effected at temperatures as high as about 136°C but in general a temperature of up to 110°C is preferred, for example up to about 100°C. Conveniently, the contacting is effected at the boiling point of the reaction mixture, for example about 84°C using 1,2-dichloroethane as the solvent.

The reaction with the transition metal compound is preferably effected using an excess of the transition metal compound relative to the magnesium compound. The reaction is conveniently effected by suspending the magnesium compound in undiluted liquid transition metal compound, preferably titanium tetrachloride and agitating the mixture at a suitable temperature for a time sufficient to achieve the necessary reaction. The reaction may be effected in more than one stage, using a fresh sample of the transition metal compound for each stage.

The amount of transition metal compound used for each stage is conveniently at least two and preferably at least five moles for each mole of the magnesium compound. However, substantially greater proportions of transition metal compound may be used, for example up to 60 moles of transition metal compound for each mole of the magnesium compound. In general a satisfactory excess of transition metal compound is obtained using at least 2 cm³ of undiluted titanium tetrachloride for each gramme of the magnesium compound and in particular from 3 up to 20 cm³ of titanium tetrachloride for each gramme of the magnesium compound. When the reaction has been completed, the excess transition metal compound is preferably removed from the reaction mixture whilst still at an elevated temperature, particularly at a temperature of at least 80°C. The excess liquid can be removed using any suitable technique, for example filtration, decantation, syphoning or centrifuging.

The reaction with the transition metal compound is preferably effected using an undiluted liquid transition metal compound but reaction can be effected using a solution of the transition metal compound in a suitable solvent, particularly an inert material such as an inert hydrocarbon or halohydrocarbon liquid, especially an aliphatic hydrocarbon. If a solution of titanium tetrachloride is used, preferably such a solution contains at least 25%, and especially at least 45% by weight of titanium tetrachloride.

Lewis Base (I) is preferably used during one stage of the reaction with the transition metal compound. If two reaction stages are used, the Lewis Base (I) is conveniently used in the first stage. The Lewis Base (I) is conveniently added in a solution together with the transition metal compound or is added to a preformed mixture of the magnesium compound and the transition metal compound. It is preferably used in an amount of not more than one mole for each mole of the transition metal compound. The amount which is used is preferably sufficient to give a reaction product containing from 0.001 up to 0.5 moles of Lewis Base (I) for each gram atom of the transition metal. It is especially preferred that it is used in an amount sufficient to give 0.01 up to 0.2 moles of Lewis Base compound for each gram atom of transition metal.

The reaction product is preferably washed to remove by-products. The liquid medium used to effect the washing is conveniently an inert hydrocarbon or halohydrocarbon. Suitable inert liquids include hexane, heptane, octane, decane, dodecane and mixtures of the isomers thereof, aromatic liquids such as benzene and toluene, and halohydrocarbons such as 1,2-dichloroethane and chlorobenzene. The washing is conveniently effected by suspending the reaction product in the inert liquid hydrocarbon or halohydrocarbon medium and agitating the mixture for a period of time of at least 5 minutes up to 10 hours conveniently 10 minutes up to 5 hours. The number of washing steps will depend on the quantity of the inert liquid hydrocarbon or halohydrocarbon used in each washing step, the time and temperature of each washing step, and the nature of the reaction mixture. It is generally preferred to use at least two, and not more than five, washes. The washing step may be effected at ambient temperature but it is preferred that at least one washing step is effected under conditions such that the inert liquid hydrocarbon or halohydrocarbon attains an elevated temperature which is in the range 60°C up to 120°C, and especially at least 80°C.

The at least one washing step is believed to remove some complexes of the transition metal compound and the Lewis Base (I) from the reaction product and also to remove any excess unreacted transition metal compound which remains. For the removal of the complexes, it is desirable that the at least one washing step, and particularly at least the first washing step when several washing steps are used, is effected at an elevated temperature of at least 60°C, particularly at least 80°C. However, if more than one washing step is used, the washing steps after the first step may be effected at a lower temperature. It is preferred to effect the washing step, or the first washing step, before any substantial cooling has occurred after separating the reaction product from the transition metal compound. Thus, it is preferred to add hot inert hydrocarbon or halohydrocarbon liquid to the separated solid reaction product within a few minutes, for example within one to 30 minutes, of removing the transition metal compound. The at least one washing step is conveniently effected in a vessel containing heating means, such as an outer jacket for a heating fluid, and it is preferred to continue heating during the washing step or during at least the first of the washing steps. After the reaction with the transition metal compound, the washing may be effected without allowing any appreciable cooling of the separated solid reaction product to occur and adding the inert hydrocarbon or halohydrocarbon liquid at ambient temperature whilst still supplying heat to the solid, and the added liquid. The washing step, or each washing step, is effected by suspending the solid reaction product in the inert hydrocarbon or halohydrocarbon liquid and agitating the mixture for a period of time which may be from 5 minutes up to 10 hours, and which is preferably from 10 minutes up to 5 hours. Alternatively, continuous washing may be effected, for example using a centrifuge.

The quantity of the inert hydrocarbon or halohydrocarbon liquid used for the at least one washing step is conveniently in the range from 5 cm³ to 50 cm³ for each gramme of the solid reaction product, particularly from 8 cm³ to 20 cm³ for each gramme of the solid reaction product.

The solid reaction product may be obtained by a process which includes a grinding step. The product obtained by grinding typically contains a significant proportion, typically at least 10% by weight, of particles of a fine particle size of less than 5 micrometres. Furthermore, the ground product, in addition to having a wide particle size distribution, also has a particle form which may not be ideal for a catalyst component. Furthermore, even if no grinding step is included in the process of the present invention, the product obtained may have a particle form which is not ideal for a catalyst component. Since the particle form of the particles of the solid catalyst component may be replicated by the polymer product, for example when polymerising propylene, the particle form, and in particular the powder flow, of the polymer product will not be ideal. Furthermore, if the polymerisation is effected by a gas phase process, particularly a fluidised bed process, any fine particle size materials will be readily entrained in the circulating gas stream and removed removed from the polymerisation reactor. This could result in the presence of a highly active catalyst in the circulating gas stream which causes continuing polymerisation with the consequential deposition of polymer in, and possibly blocking of, the circulating gas loop. To minimise these problems, it may be desirable to improve the particle form of the solid reaction product used in the process of the present invention.

The particle form of the solid reaction product may be improved by incorporating, into the process of the present invention, a spray-drying process, for example as described in our European Patents Nos 0037182, 0072128 and 0072129.

We have found that the transition metal composition of the present invention, with or without the spray-drying step, may be used as a component of a polymerisation catalyst according to this invention and that this catalyst has a high activity and stereospecificity when used for the polymerisation of alpha-olefin monomers.

Component B of the catalyst system may be an organic magnesium compound or a mixture or complex thereof with an organic aluminium compound. Alternatively, a complex of a metal of Group IA with an organic aluminium compound may be used, for example, a compound of the type lithium aluminium tetraalkyl. However, it is preferred to use an organic aluminium compound and in particular it is preferred to use a tri-hydrocarbon aluminium compound such as an aluminium trialkyl compound, particularly one in which the alkyl group contains from 1 up to 10 carbon atoms, for example, aluminium triethyl, aluminium triisobutyl or aluminium trioctyl.

The Lewis Base Compound (C) is preferably an dihydrocarbyl, (for example diphenyl or dialkyl) dialkoxy silane and more preferably a diC₂₋₁₀ alkyl dimethoxy silane. Other organic silicon compounds which may be used include phenyltriethoxysilane, diphenyldiisobutoxysilane, diphenyldimethoxysilane and isobutyltriethoxysilane.

In the polymerisation catalyst system it is preferred to use at least one mole of the organic metal compound which is Component B for each gram atom of transition metal which is present in Component A of the catalyst system. In general at least 10 moles of the organic metal compound are preferred for each gram atom of transition metal but the proportion of Component B preferably does not exceed 250 moles per gram atom of transition metal in Component A. Especially preferred proportions of Component B are from 10 up to 60 moles of the organic metal compound for each gram atom of transition metal. The total proportion of the silicone Lewis Base (C) should not exceed the proportion of Component B of the catalyst system. The silicon compound is preferably used at a level of 0.01 to 0.5, especially 0.05 mol to 0.4 moles for example 0.1 moles for each mole of component B.

The catalyst system of the present invention may be obtained by pre-mixing Components A, B and C before introducing the catalyst system into a polymerisation process. Alternatively, all the catalyst components may be introduced separately into a polymerisation process.

The catalyst systems of the present invention are suitable for the polymerisation or copolymerisation of unsaturated monomers, particularly ethylenically unsaturated hydrocarbon monomers such as the olefin monomers.

As a further aspect of the present invention there is provided a process for the production of a polymer or copolymer of an unsaturated monomer wherein at least one ethylenically unsaturated hydrocarbon monomer is contacted under polymerisation conditions with a polymerisation catalyst as hereinbefore described.

The monomer which may be used in accordance with the present invention has the formula CH₂=CHR⁵ wherein
R⁵ is a hydrogen atom or a hydrocarbon radical.

Thus, the monomers which may be polymerised or copolymerised by the process of the present invention include ethylene, propylene, butene-1, pentene-1, hexene-1, 4-methylpentene-1, styrene, 1,3-butadiene or any other monomer having the above formula. The monomer is preferably an olefin monomer, particularly an aliphatic mono-olefin monomer which contains from 3 up to 10 carbon atoms.

The monomers may be homopolymerised or may be copolymerised together. If a copolymerisation is being effected this may be done using a mixture of monomers which has essentially the same composition throughout the polymerisation process. Alternatively, a sequential polymerisation process, such as described in British patents 970478 and 970479 may be used, for example by polymerising propylene alone and thereafter polymerising a mixture of propylene and ethylene to give a polymer product which contains from 2 up to 30% by weight of ethylene.

The present invention is particularly suitable for the polymerisation of propylene, and especially for the polymerisation or copolymerisation of propylene in the gas phase.

Thus, as a further aspect of the present invention there is provided a process for the polymerisation of propylene which comprises contacting gaseous propylene with a polymerisation catalyst of the type hereinbefore described and optionally thereafter contacting the polymer product wth a gaseous mixture of propylene and ethylene.

Using the process of the present invention, it is possible to obtain, as a direct product of polymerisation, a propylene polymer having a titanium content of not more than 10 parts per million by weight, especially less than 5 parts per million by weight. Preferred propylene homopolymers contain not more than 7%, and especially less than 5% by weight of polymer which is soluble in boiling heptane.

Propylene polymers obtained by the present invention can have a chlorine content which is not more than 100 parts per million, particularly not more than 50 parts per million and especially not more than 30 parts per million by weight. The homopolymer may be formed into mouldings which have a flexural modulus of more than 1.40 GN/m² and especially at least 1.5 GN/m². The flexural modulus is determined from the deformation of a test strip at 1% skin strain after 60 seconds at 23°C and 50% relative humidity measured using a cantilever beam apparatus as described in "Polymer Age", March 1970, pages 57 and 58, using a test strip at prepared as described in the detail hereafter in Note (p) to Table Six.

The low proportion of polymer which is soluble in boiling heptane and the high flexural modulus both indicate the high stereoregularity of the propylene polymers of the present invention.

The process of the present invention may also be used to sequentially polymerise propylene and ethylene to obtain sequential copolymers having a useful combination of properties.

If polymerisation is effected in the gas phase, propylene monomer may be introduced into the polymerisation vessel as a liquid with the conditions of temperature and pressure within the polymerisation vessel being such that a major proportion of the liquid propylene vaporises, thereby giving an evaporative cooling effect, whereby the polymerisation vessel contains a solid phase which is the polymerisation catalyst and the polymer formed thereon and a gaseous monomer phase with only a minor proportion of liquid monomer. Polymerisation in the gas phase may be effected using conditions which are such that the monomer is at a temperature and partial pressure which are close to the dew point temperature and pressure for that monomer, for example, as described in more detail in British patent specification 1532445. Polymerisation in the gas phase may be effected using any technique suitable for effecting a gas-solid reaction, such as a fluidised-bed reactor system, a stirred-bed reactor system or a ribbon-blender type of reactor.

It will be appreciated that the catalyst system hereinbefore described is of the type generally known as a Ziegler-Natta type of catalyst system. As is well known, Ziegler-Natta type catalysts are susceptible to the presence of impurities in the polymerisation system. Accordingly, particularly when a high yield of polymer is desired in relation to the transition metal component of the catalyst system, it is desirable to effect the polymerisation using reagents, that is monomer and possibly diluent, which have a high degree of purity, for example, a monomer which contains less than 5 ppm by weight of water and less than 1 ppm by weight of oxygen. Materials having a high degree of purity can be obtained by processes such as those described in British Patent Specifications 1111493, 1226659 and 1383611.

The polymerisation may be effected either in a batch manner or on a continuous basis.

When carrying out polymerisation on a continuous basis, the organic metal compound and the silicon compound (C) may be pre-mixed just before being introduced into the polymerisation reaction vessel.

It has been found that it is often advantageous to perform a pre-polymerisation step in which the monomer is fed to the catalyst system to produce a "pre-polymer" at a temperature lower than that of the main polymerisation. Typically, 1 to 100 g of polymer is produced at this stage for each g of the transition metal composition.

The polymerisation can be effected in the presence of a chain transfer agent such as hydrogen in order to control the molecular weight of the polymer product. The proportion of chain transfer agent used will be dependent on the polymerisation conditions and on the particular monomer or monomer mixture which is being polymerised. Using hydrogen in the polymerisation of propylene, it is preferred to use hydrogen in a proportion of from 0.01 to 5.0%, particularly from 0.05 up to 2.0% molar relative to the monomer. However, when the monomer being polymerised is ethylene, or a mixture in which ethylene is a major polymerisable component (by moles), the amount of hydrogen used is typically much greater, for example, in the homopolymerisation of ethylene the reaction mixture may contain in excess of 50% molar of hydrogen, whereas if ethylene is being copolymerised, the proportion of hydrogen present is typically up to 35% molar of the total reaction mixture.

The polymerisation can be effected under any conditions which have been previously proposed for effecting the polymerisation of olefin monomers. Thus, ethylene polymerisation may be effected at pressures of up to 3000 kg/cm², and at such pressures the polymerisation temperature may be as high as 300°C. However, it is preferred to carry out the polymerisation at comparatively low pressures and temperatures, particularly for the production of polymers of the higher olefins (including propylene) which have a high stereoregularity. More specifically, the polymerisation is effected at pressures which are conveniently in the range from 1 up to 100 kg/cm², preferably at a pressure of up to 50 kg/cm² and especially at pressures in the range from 5 up to 40 kg/cm².

The polymerisation temperature used will be dependent in part on the particular polymerisation technique being used. Thus, it is possible to use polymerisation temperatures in excess of the melting point of the polymer and such conditions may be used in the polymerisation, or copolymerisation, of ethylene in the presence of a hydrocarbon liquid which can act as a solvent for the polymer formed. However, in general, it is preferred to use temperatures below the melting temperature of the polymer formed and in particular it is preferred to use temperatures of not more than 100°C. The polymerisation temperature is typically in the range from 40°C up to 100°C.

It is generally preferred to effect all stages in the preparation of the transtion metal composition in an inert atmosphere atmosphere which is essentially free from oxygen-containing impurities such as water vapour. Very preferably the polymerisation process of the present invention should also be effected in the essential absence of such impurities since these can have a harmful effect on the polymerisation process.

Polymers may be obtained by the process of the present invention which have a high molecular weight as indicated by the melt flow index of the polymer, which is typically in the range from 0.01 up to 1000. For propylene polymers, including copolymers, the melt flow index is measured by ASTM Test Method D1238/70, using a temperature of 190°C and a weight of 10 kg.

Various aspects of the present invention will now be described with reference to the following Examples which are illustrative of the invention. In the Examples, all operations are effected under an atmosphere of essentially oxygen- and water-free nitrogen unless otherwise indicated. All the glass apparatus was dried in air oven at 120°C for at least one hour and purged with nitrogen before use.

In the propylene polymerisation examples, the propylene used for the polymerisation had been purified further by passing gaseous propylene of commercial purity through a column containing granules of Alcoa F1 alumina at ambient temperature.

### Magnesium benzoate

In some of the following examples, the magnesium benzoate was a commercially available product (magnesium benzoate, available from J Storey, Lancaster, England) which was used after drying.

In most of the examples, magnesium benzoate was prepared by the reaction of magnesium metal with benzoic acid. 24.3 g (one mole) of magnesium metal powder were added to a 5 dm³ round-bottomed flask fitted with a stirrer and bubbler. 2dm³ of toluene were added and the mixture was stirred. 244.24g (2 mole) of benzoic acid were added whilst continuing to stir, followed by 300 cm³ of water and 100 cm³ of methanol. The mixture was stirred for 24 hours without heating. A white powder was formed which was separated by decantation and washed in turn with toluene and pentane. Analysis showed the product to be Mg (OOCC₆H₅)₂.4H₂O. This product was dehydrated before use by heating in air in an oven at 110°C for 24 hours.

The commercially available magnesium benzoate will be identified hereafter as MgBz-A whilst that prepared from magnesium and benzoic acid will be identified as MgBz-B.

### Example 1

### A) Ball milling stage

A Siebtechnik SM6 Vibromill chamber having a total usable volume of about 1.5dm³ and containing 180 stainless steel balls of 25 mm diameter was sealed, evacuated to a pressure of 0.3 x 10⁻³ kg/cm and purged with nitrogen, to give an atmosphere of nitrogen in the mill. The mill was vibrated at a frequency of 1500 oscillations per minute an an amplitude of 2 mm. 199 g of magnesium benzoate (Mg Bz-B) were introduced into the mill whilst the mill was being vibrated. After the addition of the magnesium benzoate, the mill was vibrated for 24 hours without heating or cooling the mill chamber.

After 24 hours, 29 g of diisobutyl phthalate were syringed into the mill and vibration of the mill was continued for a further 24 hours. 20 g of titanium tetrachloride were then added and milling was continued for a further 24 hours. The milled product was removed from the mill and stored under nitrogen in a one dm³ flask. The molar ratio of magnesium benzoate to diisobutyl phthalate to titanium tetrachloride product was 7:1:1. This milled product will be referred to hereafter as MI.

### B) Contacting with titanium tetrachloride

15 g of the milled product (MI) of step A) were transferred to a jacketed glass vessel provided with a stirrer and having a capacity of 500 cm³. 200 cm³ of titanium tetrachloride were added to the vessel, the stirrer was started and heating applied to the jacket. Heating was continued until a temperature of 99°C was attained. The temperature was maintained at 99°C and stirring was continued for 16 hours. At the end of 16 hours, the stirrer was stopped but heating was continued and the solid was allowed to settle over a period of two hours. The supernatant liquid was syphoned off from the settled solid.

### C) Washing

To the residue remaining from step B) were added 200 cm³ of a heptane fraction containing heptane isomers of which about 35% by weight was n-heptane (hereafter this mixture is referred to simply as the "heptane" fraction). The mixture was stirred and heated up to 99°C. The mixture was stirred at 99°C, the stirrer was then stopped, the solid allowed to settle and the supernatant liquid was syphoned off from the settled solid. This process was carried out a total of three times to give a total washing time at 99°C of 24 hours.

### Examples 2 to 15

The procedure described in Example 1 was repeated using different reaction conditions and different proportions of the reagents. Some of the milled products were used to prepare several transition metal compositions. The milling conditions are summarised in Table One, whilst Table Two sets out the conditions used subsequently for the preparation of the transition metal compositions. Table Three gives the results (normalised) of analysis of some of the transition metal compositions.

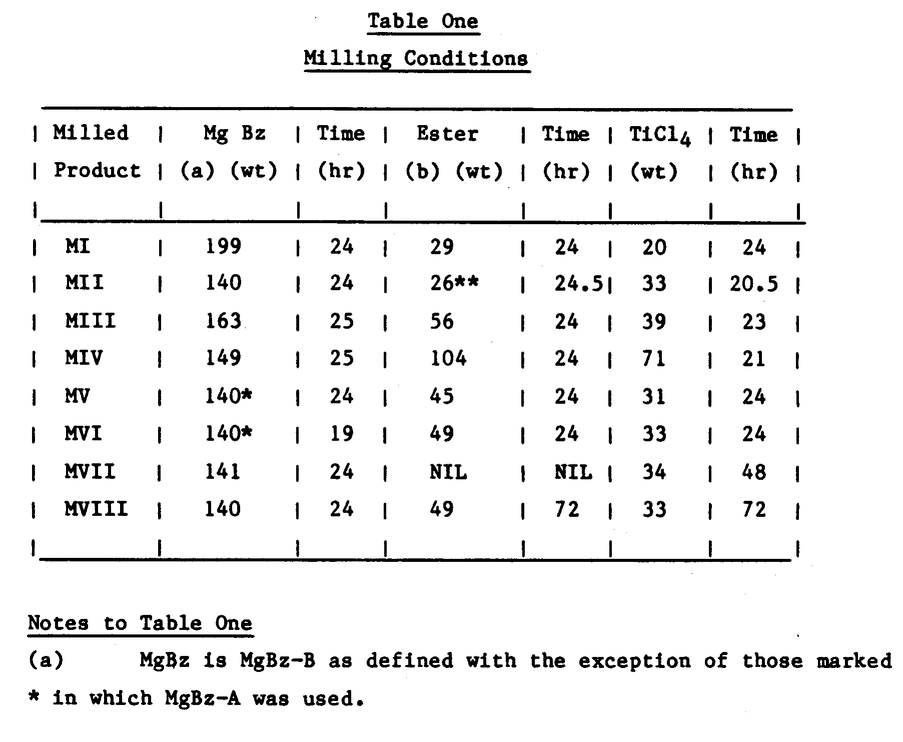

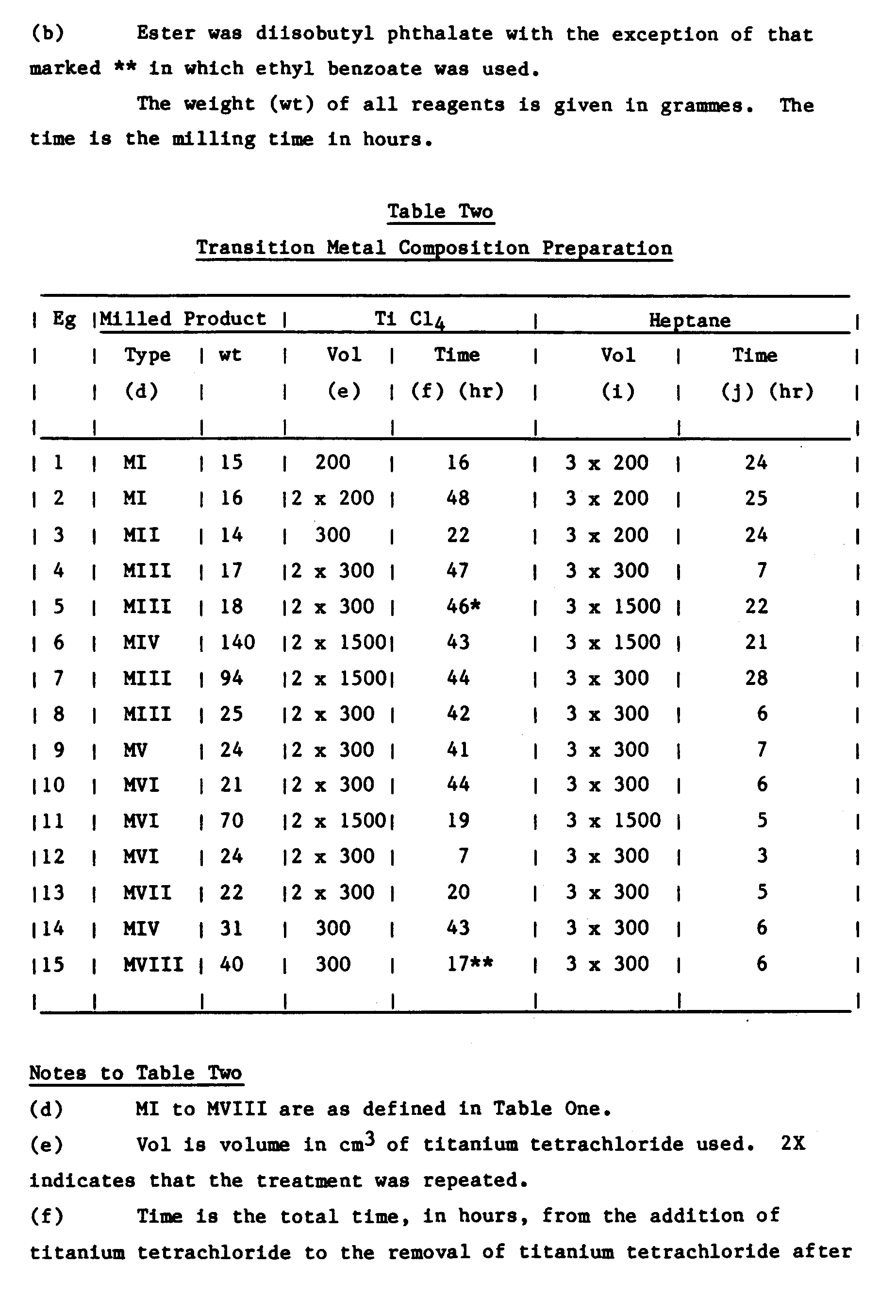

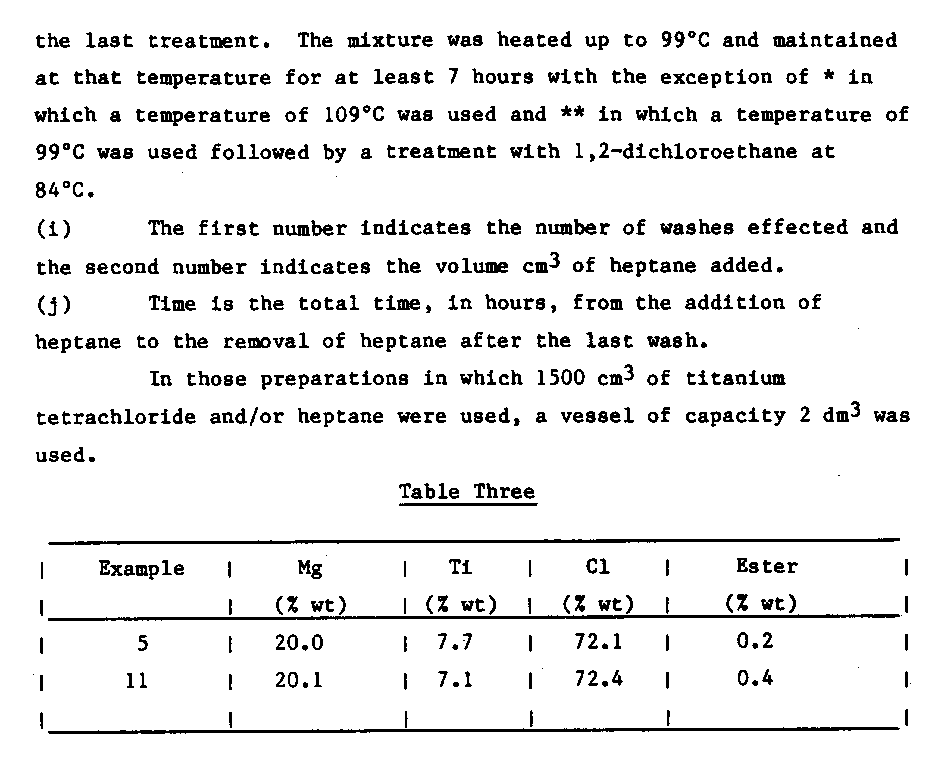

### Example 16

A transition metal composition was prepared without using a ball milling stage.

11 g of magnesium benzoate (MgBz-B as defined) was placed in a jacketed glass vessel provided with a stirrer and having a capacity of 500 cm³. A solution of 4 cm³ of diisobutylphthalate in 200 cm³ of 1,2-dichloroethane was introduced into the vessel and the mixture was stirred and heated up to 84°C. The mixture was maintained, with stirring, at 84°C, for two hours and then stirring was stopped and the mixture was allowed to cool to ambient temperature.

Without separating the supernatant liquid, 300 cm³ of titanium tetrachloride (5 cm³/g of magnesium benzoate) were introduced into the reaction vessel. The mixture was stirred, heated up to 84°C and maintained at 84°C, with stirring, for 16 hours. The mixture was allowed to cool and settle. The supernatant liquid was siphoned off.

The solid was then washed three times using 200 cm² of heptane and a temperature of 84°C for each wash, conditions otherwise being as described for step C) in Example 1.

### Examples 17 and 18

The procedure of Example 16 was repeated using different proportions of reagents. At the end of the first stage, the mixture was maintained at 84°C, stirring was stopped, the solid was allowed to settle and the supernatant liquid was siphoned off. The titanium tetrachloride was slowly added to the mixture from which the supernatant liquid had been removed.

The proportions of reagents used in Examples 16 to 18 are set out in Table Four.

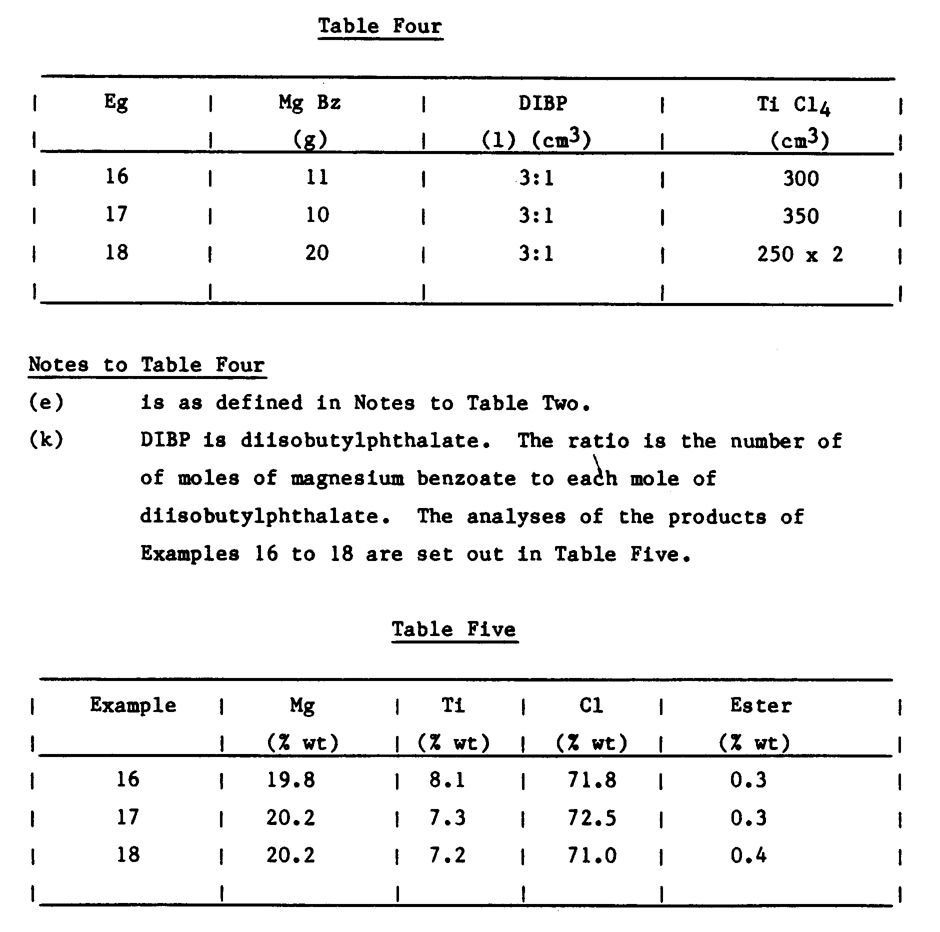

### Examples 19 to 43

The products of Examples 1 to 4 and 6 to 18 were used to effect the polymerisation of propylene.

Polymerisation was carried out in an 8 dm³ stainless steel autoclave.

3 dm³ of an aliphatic hydrocarbon diluent consisting essentially of dodecane isomers and having a boiling point in the range 170 to 180°C (hereafter referred to simply as the "aliphatic hydrocarbon") were charged into the autoclave and degassed at 70°C for 15 minutes at a pressure of 0.07 kg/cm² absolute. Propylene was then admitted to the vessel in an amount to give a pressure of 1.1 kg/cm² absolute. The aliphatic hydrocarbon was stirred and stirring was continued throughout the following procedures. 10 cm³ of a Molar solution, in the aliphatic hydrocarbon, of aluminium triethyl were added to the autoclave followed by 40 cm³ of a solution in the aliphatic hydrocarbon of phenyltriethoxysilane. 4 cm³ of a suspension of a transition metal composition were then added.

The autoclave was maintained at 70°C while propylene was passed into the autoclave to achieve a pressure in the range 8 to 9 kg/cm² absolute. 20 millimoles of hydrogen were then added. The pressure was maintained in the range 8 to 9 kg/cm² absolute by feeding propylene. A further 20 millimole quantity of hydrogen was added to the autoclave one hour after pressurising to a pressure in the range 8 to 9 kg/cm² absolute. After two hours, the propylene feed was terminated and the autoclave was vented to atmospheric pressure. The polymer suspension was passed into a receptacle and the polymer was filtered off in air. A sample of the polymer was dried at 100°C in a fluidised bed using nitrogen as the fluidising gas. Further details of the polymerisation conditions and the properties of the polymers obtained are set out in Table Six.

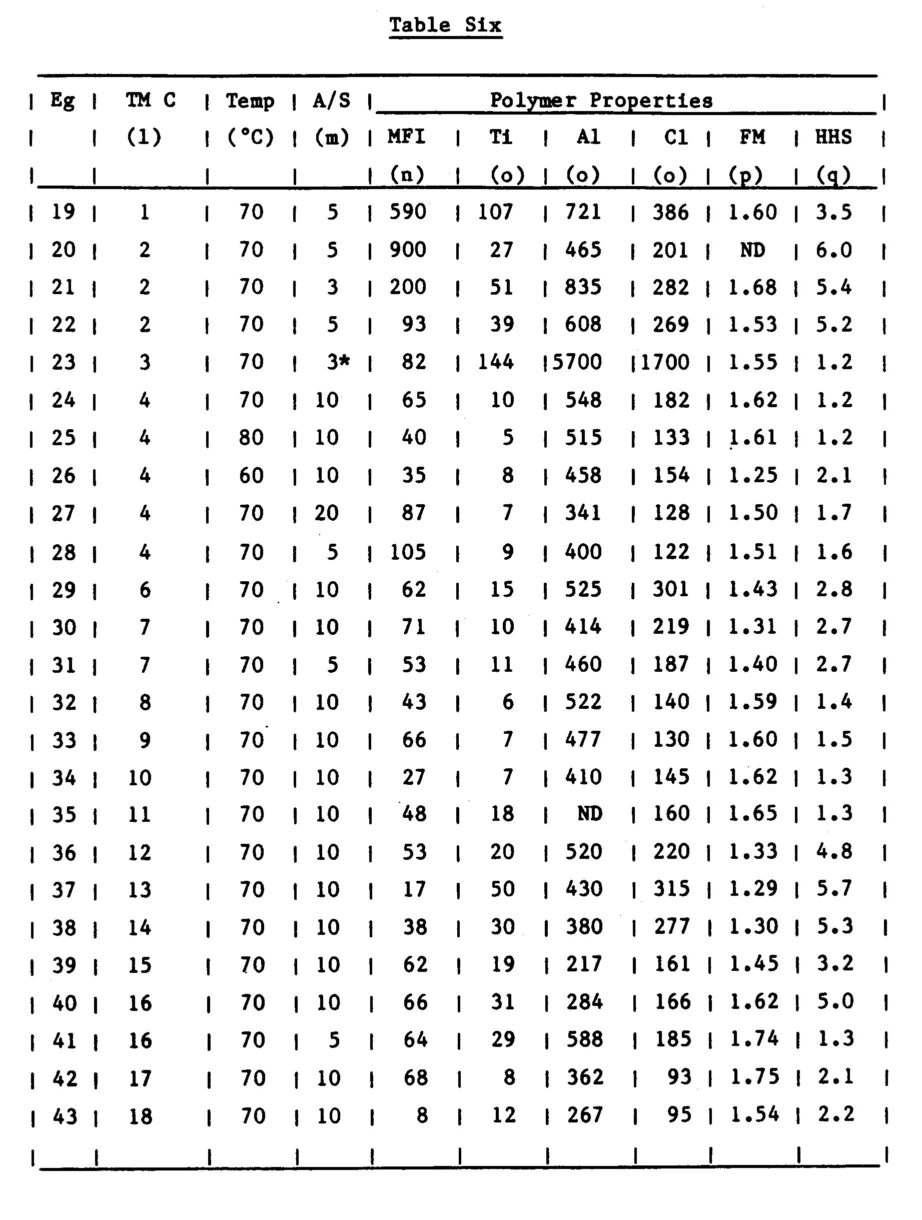

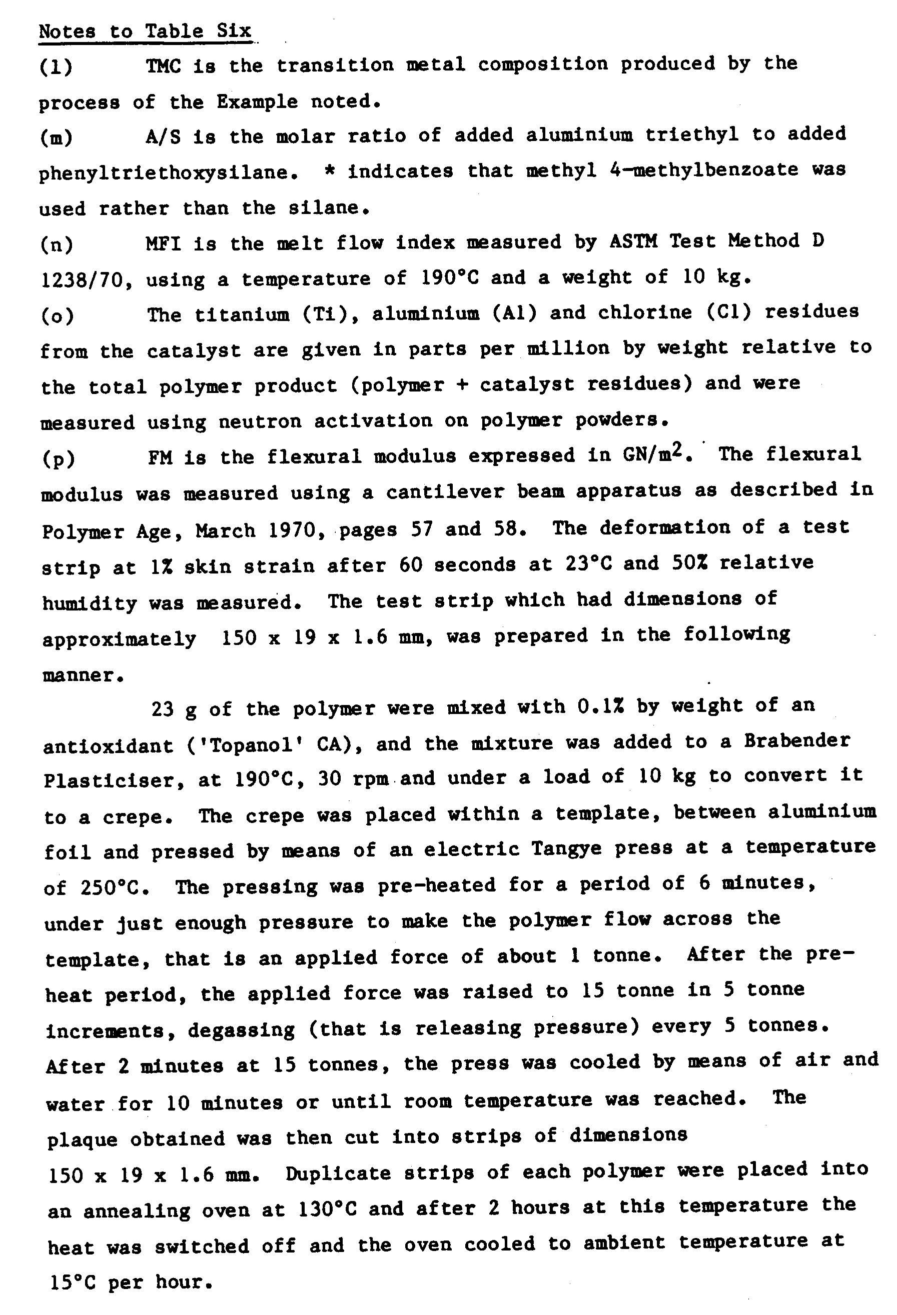

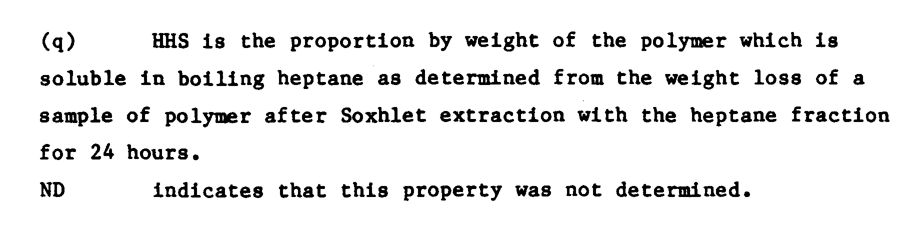

### Examples 44 to 51

Propylene was polymerised continuously in the gas phase as described hereafter. To initiate the polymerisation, the reaction vessel initially contained about 5 kg of polypropylene powder having a flexural modulus of 1.45 GN/m², and containing 4% by weight of polymer soluble in the heptane fraction by Soxhlet extraction for 24 hours.

Polymerisation was effected in a 25 dm³ stainless steel autoclave fitted with a stirrer and having a heating jacket. Initially, the polypropylene powder was placed in the autoclave. The pressure was reduced to 75 millibars and then nitrogen was added to a pressure of one bar, this procedure being carried out a total of three times. The stirrer was rotated at 60 rpm and stirring was continued throughout the following procedure. The autoclave was heated up to 80°C and then evacuated to a pressure of 75 millibars. Liquid propylene was added to the autoclave and vaporised to raise the pressure to 28 kg/cm² gauge. Hydrogen was added separately in the proportion of 1.5% by weight relative to the propylene.

Equal volumes of a 1.5 M solution of tri-ethyl aluminium in the aliphatic hydrocarbon diluent and a 0.6 M solution of phenyltriethoxysilane in the aliphatic hydrocarbon were pumped into the autoclave from separate vessels, the liquid streams being mixed together just before entry into the autoclave. A suspension in the heptane fraction containing a transition metal composition obtained by the process of either Example 7 or 11 and having a solids content of about 50% by weight was also introduced into the autoclave. The mixture of the aluminium compound and the ester, and the suspension of the titanium composition were added until polymerisation was observed to start. Liquid propylene was being introduced, and gaseous propylene vented off, whilst the catalyst was being added.

Once polymerisation had started, venting of the autoclave was stopped, liquid propylene at 20°C was introduced into the autoclave at a rate to maintain a pressure of 28 kg/cm² gauge, (about 3 kg/hr) and polypropylene, saturated with propylene, was intermittently withdrawn from the autoclave at a desired rate, typically about 2.5 kg of polymer per hour. The temperature and pressure were maintained at 80°C to 85°C and 28 kg/cm² gauge respectively. The mixture of the trialkyl aluminium compound and the ester was continuously introduced into the autoclave at a rate corresponding to 18 millimoles per hour of the aluminium compound. The suspension of the transition metal composition was continuously introduced into the autoclave at a rate sufficient to produce 2.5 to 3 kg of polymer per hour.

During the operation of the autoclave, the nature of the transition metal composition was changed and operation of the autoclave was continued using various different transition metal composition.

Further details of the polymerisation conditions are set out in Table Seven together with properties of the polymer products removed at various times during the polymerisations.

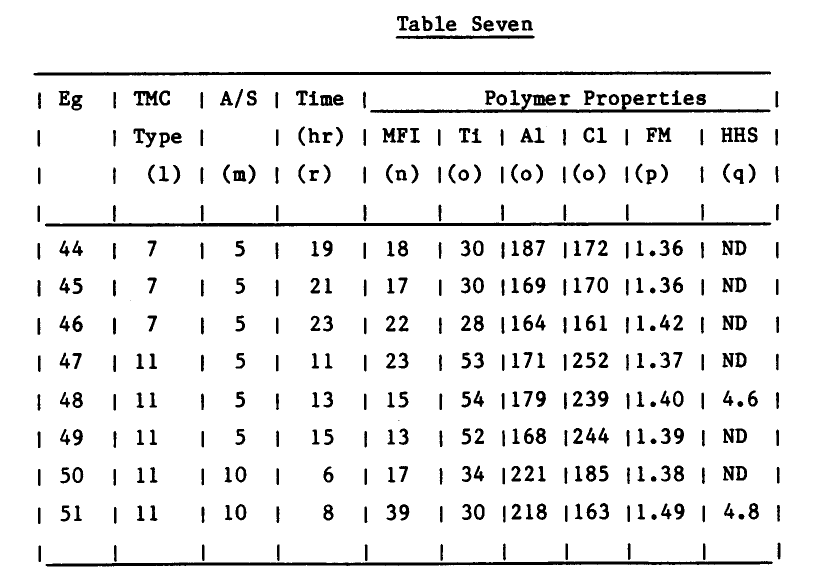

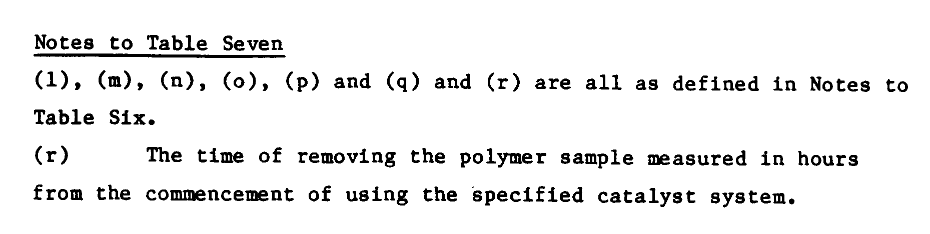

### Examples 52 to 55

Between 10 g and 30 g of a dry magnesium carboxylate were suspended in 1,2-dichloroethane in a one dm³ glass, three-necked, jacketted vessel under an atmosphere of nitrogen. Di-isobutyl phthalate was added in the proportion of 0.33 Mole for each mole of the magnesium carboxylate. The mixture was stirred for 16 hours at ambient temperature and then heated up to 84°C, maintained at 84°C for one hour and the stirrer turned off. The mixture was allowed to settle for four hours and the supernatant liquid was decanted off. The heating was turned off and the settled mixture allowed to cool to room temperature over a period of two hours.

330cm³ of titanium tetrachloride was then added whilst stirring the mixture. The mixture was heated up to 84°C and stirring at 84°C was continued for 16 hours. Stirring was terminated and the solid was allowed to settle over a period of 5 hours whilst maintaining the temperature of 84°C. The supernatant liquid was decanted off and of 1,2-dichloroethane was added. The mixture was stirred at 84°C for one hour and then allowed to settle. The supernatant liquid was decanted off. The solid was finally washed two or three times, each wash being effecting by stirring with the heptane fraction for one hour, allowing to settle and decanting off the supernatant liquid. Further details of the preparation are given in Table Eleven.

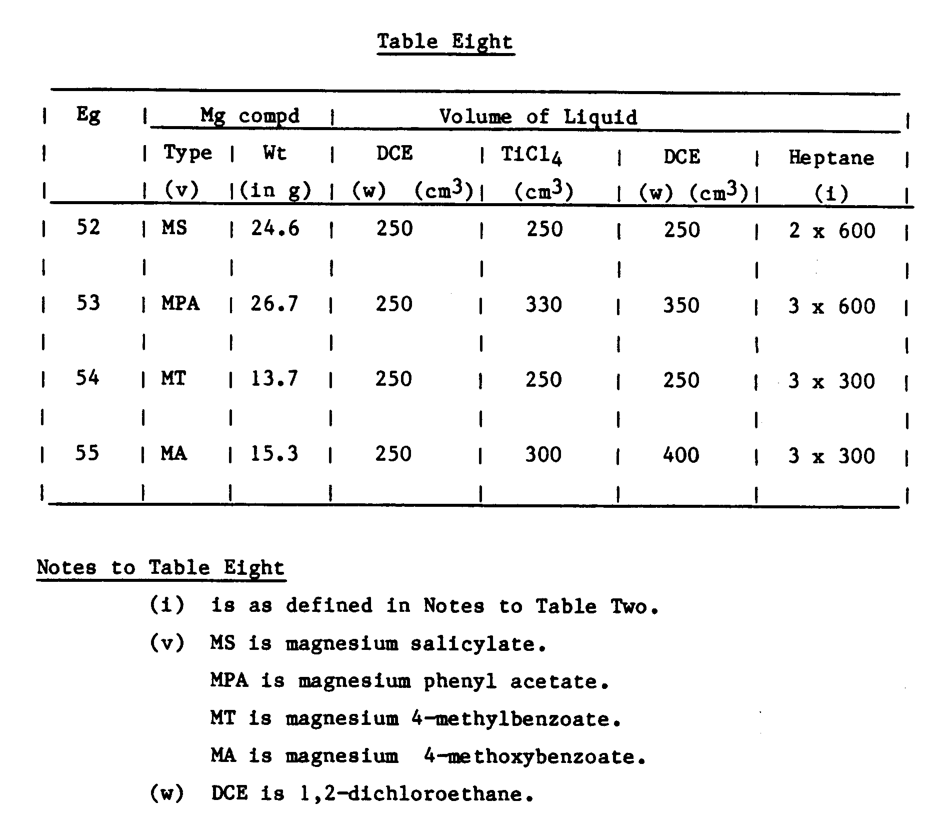

The products were analysed and the results of the analysis are given in Table Twelve as an atomic ratio of titanium, magnesium and chlorine. Analysis was effected by dissolving a sample of the product in aqueous 3M sulphuric acid. The solution thus obtained was analysed for titanium by colormetric titration using hydrogen peroxide, for magnesium by atomic absorption and for chlorine (as chloride ion) by precipitation with silver nitrate solution, as was also the case for the data shown in Tables Three and Five).

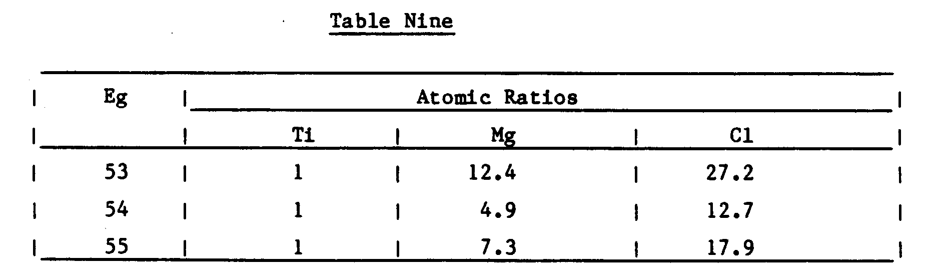

### Examples 56 to 59

The products of Examples 52 to 55 were used to effect the polymerisation of liquid propylene.

10 millimoles of aluminium triethyl, 1 millimole of dimethoxydiphenylsilane and the product of Examples 52 to 55 in amount to provide 0.1 to 0.5 millimole of titanium were added to a 8 dm³ stirred stainless steel autoclave under nitrogen and at ambient temperature. 5.5 dm³ of liquid propylene were then added and the autoclave was maintained, with stirring, at 20°C for 15 minutes. The temperature was then raised to 70°C over a period of 15 minutes. Hydrogen was then added. The mixture was stirred at 70°C for a period of one hour, the autoclave was then vented and the polypropylene powder produced was recovered.

Further details of the polymerisation conditions are set out in Table Ten together with properties of the polymer products obtained.

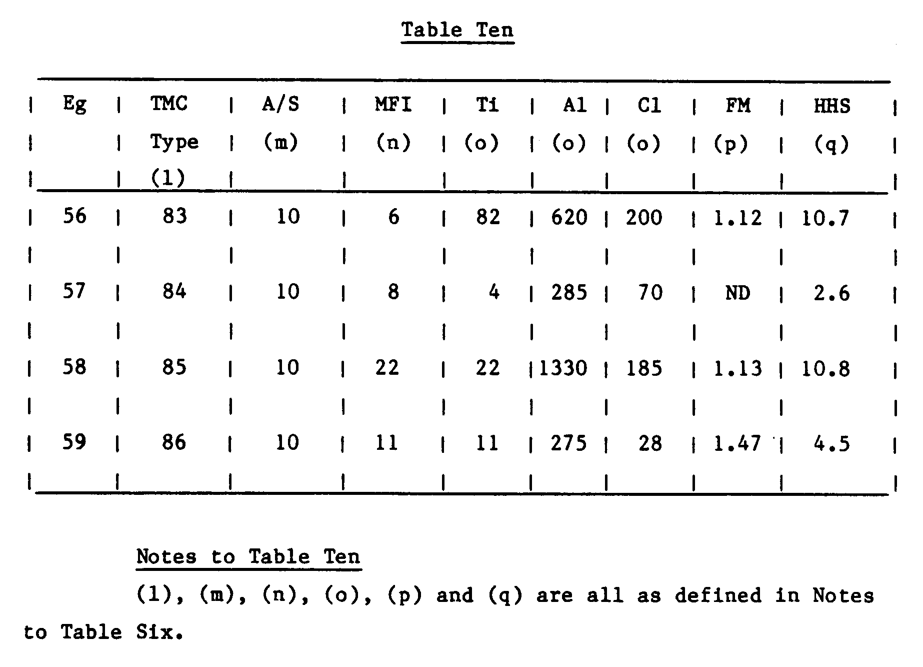

## Claims

1. A polymerisation catalyst which comprises:
(A) the solid reaction product of:
(i) a transition metal compound of Group IVA, VA or VIA of the Periodic Table; with
(ii) a magnesium compound of compound of the general formula :
Mgₓ[R(COO)_{y}]_{z}
where
R contains a cyclic group which comprises an aromatic or heterocyclic ring; and
x,y and z are integers such that $\text{yz = 2x}$ ; and
(iii) a Lewis base (I) of the general formula:
R¹ₐ Ar (COOR²)_{b}
where
Ar is a residue of an aromatic hydrocarbon;
R¹ is a hydrogen atom, a hydrocarbon radical, a halohydrocarbon radical, a halogen atom or a group OR³, where R³ is a hydrocarbon radical or a halohydrocarbon radical;
R² is a hydrocarbon radical or a halohydrocarbon radical;
a is zero or an integer; and
b is an integer;
(B) an organic compound of aluminium and/or of a metal of group IIa of the Periodic Table; and
(C) a Lewis Base compound which is an organic silicon compound containing one or more Si-OR⁴, Si-OCOR⁴ or Si-NR⁴ bonds,
where
R⁴ is a hydrocarbon radical which may be substituted with one or more halogen atoms and/or oxyhydrocarbon groups.

2. A catalyst as claimed in claim 1 wherein R is a phenyl or substituted phenyl group.

3. A catalyst as claimed in either claim 1 or claim 2 wherein R is an alkyl or alkoxy phenyl group, having 1 to 4 carbon atoms in its alkyl or alkoxy group, or is a hydroxyphenyl group.

4. A catalyst as claimed in any one of claims 1 to 3 wherein the transition metal compound is titanium tetrachloride.

5. A catalyst as claimed in any one of claims 1 to 4 wherein the Lewis Base (I) is a diester of phthalic acid.

6. A catalyst as claimed in any one of claims 1 to 5 wherein component (B) is an organic aluminium compound.

7. A catalyst as claimed in any one of claims 1 to 6 wherein component (B) is aluminium triethyl.

8. A method of making a catalyst as claimed in any one of claims 1 to 7 which comprises forming transition metal composition (A) of the catalyst by reacting at a temperature of at least 50°C:
(i) a compound of a transition metal of Group IVA, VA or VIA of the Periodic Table;
(ii) a magnesium compound of compound of the general formula :
Mgₓ[R(COO)_{y}]_{z}
where
R contains a cyclic group which comprises an aromatic or heterocyclic ring; and
x,y and z are integers such that $\text{yz = 2x}$ ; and
(iii) a Lewis base (I) of the general formula:
R¹ₐ Ar (COOR²) _{b}
where
Ar is a residue of an aromatic hydrocarbon;
R¹ is a hydrogen atom, a hydrocarbon radical, a halohydrocarbon radical, a halogen atom or a group OR³, where R³ is a hydrocarbon radical or a halohydrocarbon radical;
R² is a hydrocarbon radical or a halohydrocarbon radical;
a is zero or an integer; and
b is an integer;
and combining the thus formed solid component (A) with components (B) and (C) as defined in any one of claims 1 to 7.

9. A method of making a polymer or copolymer of an unsaturated monomer wherein at least one ethylenically unsaturated hydrocarbon monomer is contacted, under polymerisation conditions, with a polymerisation catalyst as claimed in any one of claims 1 to 7.

10. A method as claimed in claim 9 wherein the ethylenically unsaturated monomer is of the formula:
CH₂=CHR⁵
where
R⁵ is a hydrogen atom or a hydrocarbon radical.

11. A method as claimed in claim 10 wherein the ethylenically unsaturated monomer is propylene.

12. A process for the manufacture of polypropylene which comprises:
(1) reacting at a temperature of at least 50°C
(i) a compound of a transition metal of Group IVA, VA or VIA of the Periodic Table;
(ii) a magnesium compound of compound of the general formula :
Mgₓ[R(COO)_{y}]_{z}
where
R contains a cyclic group which comprises an aromatic or heterocyclic ring; and
x,y and z are integers such that $\text{yz = 2x}$ ; and
(iii) a Lewis base (I) of the general formula:
R¹ₐ Ar (COOR²)_{b}
where
Ar is a residue of an aromatic hydrocarbon;
R¹ is a hydrogen atom, a hydrocarbon radical, a halohydrocarbon radical, a halogen atom or a group OR³, where R³ is a hydrocarbon radical or a halohydrocarbon radical;
R² is a hydrocarbon radical or a halohydrocarbon radical;
a is zero or an integer; and
b is an integer;
to form a solid reaction product, and
(2) polymerising propylene, optionally together with ethylene in the presence of a catalyst system which is the solid reaction product formed in step 1 together with:
(i) an organic compound of aluminium and/or of a metal of group IIa of the periodic table; and
(ii) a Lewis Base compound which is an organic silicon compound containing one or more Si-OR⁴, Si-OCOR⁴ or Si-NR⁴ bonds,
where
R⁴ is a hydrocarbon radical which may be substituted with one or more halogen atoms and/or oxyhydrocarbon groups.

## Patentansprüche

1. Polymerisationskatalysator, enthaltend:
(A) das feste Reaktionsprodukt aus:
(i) einer Übergangsmetallverbindung der Gruppe IVA, VA oder VIA des Periodensystems mit
(ii) einer Magnesiumverbindung der allgemeinen Formel:
Mgₓ[R(COO)_{y}]_{z}
bei der
R eine cyclische Gruppe enthält, die einen aromatischen oder heterocylischen Ring darstellt, und
x, y und z ganze Zahlen sind, wobei $\text{yz = 2x}$ ist, sowie
(iii) einer Lewisbase (I) der allgemeinen Formel:
R¹ₐAr(COOR²)_{b}
bei der
Ar einen Rest eines aromatischen Kohlenwasserstoffs,
R¹ ein Wasserstoffatom, einen Kohlenwasserstoffrest, einen Halogenkohlenwasserstoffrest, ein Halogenatom, oder eine Gruppe OR³, wobei R³ für einen Kohlenwasserstoffrest oder einen Halogenkohlenwasserstoffrest steht,
R² einen Kohlenwasserstoffrest oder einen Halogenkohlenwasserstoffrest,
a null oder eine ganze Zahl sowie
b eine ganze Zahl bedeutet,
(B) eine organische Verbindung des Aluminiums und/oder eines Metalls der Gruppe IIa des Periodensystems und
(C) eine lewisbasische Verbindung, bei der es sich um eine organische Siliziumverbindung mit einer oder mehreren Si-OR⁴-, Si-OCOR⁴- oder Si-NR⁴- Bindungen handelt,
wobei
R⁴ einen Kohlenwasserstoffrest, der durch Halogenatome und/oder Oxykohlenwasserstoffgruppen ein- oder mehrfach substituiert sein kann, bedeutet.

2. Katalysator nach Anspruch 1, wobei R eine gegebenenfalls substituierte Phenylgruppe bedeutet.

3. Katalysator nach einem der Ansprüche 1 und 2, wobei R eine Alkyl- oder Alkoxyphenylgruppe mit 1 bis 4 Kohlenstoffatomen in deren Alkyl- oder Alkoxygruppe oder eine Hydroxyphenylgruppe bedeutet.

4. Katalysator nach einem der Ansprüche 1 bis 3, wobei es sich bei der Übergangsmetallverbindung um Titantetrachlorid handelt.

5. Katalysator nach einem der Ansprüche 1 bis 4, wobei es sich bei der Lewisbase (I) um einen Phthalsäurediester handelt.

6. Katalysator nach einem der Ansprüche 1 bis 5, wobei es sich bei der Komponente (B) um eine organische Aluminiumverbindung handelt.

7. Katalysator nach einem der Ansprüche 1 bis 6, wobei es sich bei der Komponente (B) um Aluminiumtriethyl handelt.

8. Verfahren zur Herstellung eines Katalysators gemäß einem der Ansprüche 1 bis 7, bei dem man die Übergangsmetallkomponente (A) des Katalysators bildet, indem man
(i) eine Übergangsmetallverbindung der Gruppe IVA, VA oder VIA des Periodensystems mit
(ii) einer Magnesiumverbindung der allgemeinen Formel:
Mgₓ[R(COO)_{y}]_{z}
bei der
R eine cyclische Gruppe enthält, die einen aromatischen oder heterocylischen Ring darstellt, und
x, y und z ganze Zahlen sind, wobei $\text{yz = 2x}$ ist, sowie
(iii) einer Lewisbase (I) der allgemeinen Formel:
R¹ₐAr(COOR²)_{b}
bei der
Ar einen Rest eines aromatischen Kohlenwasserstoffs,
R¹ ein Wasserstoffatom, einen Kohlenwasserstoffrest, einen Halogenkohlenwasserstoffrest, ein Halogenatom, oder eine Gruppe OR³, wobei R³ für einen Kohlenwasserstoffrest oder einen Halogenkohlenwasserstoffrest steht,
R² einen Kohlenwasserstoffrest oder einen Halogenkohlenwasserstoffrest,
a null oder eine ganze Zahl sowie
b eine ganze Zahl bedeutet,
bei einer Temperatur von mindestens 50°C miteinander umsetzt und die so gebildete Feststoffkomponente (A) mit den Komponenten (B) und (C) gemäß einem der Ansprüche 1 bis 7 vereinigt.

9. Verfahren zur Herstellung eines Polymerisats oder Copolymerisats aus einem ungesättigten Monomer, bei dem man mindestens ein ethylenisch ungesättigtes Kohlenwasserstoffmonomer unter Polymerisationsbedingungen mit einem Polymerisationskatalysator nach einem der Ansprüche 1 bis 7 kontaktiert.

10. Verfahren nach Anspruch 9, wobei man als ethylenisch ungesättigtes Monomer ein solches der Formel:
CH₂ = CHR⁵
bei der
R⁵ ein Wasserstoffatom oder einen Kohlenwasserstoffrest bedeutet, einsetzt.

11. Verfahren nach Anspruch 10, wobei man als ethylenisch ungesättigtes Monomer Propylen einsetzt.

12. Verfahren zur Herstellung von Polypropylen, bei dem man:
(1) bei einer Temperatur von mindestens 50°C
(i) eine Übergangsmetallverbindung der Gruppe IVA, VA oder VIA des Periodensystems mit
(ii) einer Magnesiumverbindung der allgemeinen Formel:
Mgₓ[R(COO)_{y}]_{z}
bei der
R eine cyclische Gruppe enthält, die einen aromatischen oder heterocylischen Ring darstellt, und
x, y und z ganze Zahlen sind, wobei $\text{yz = 2x}$ ist, sowie
(iii) einer Lewisbase (I) der allgemeinen Formel:
R¹ₐAr(COOR²)_{b}
bei der
Ar einen Rest eines aromatischen Kohlenwasserstoffs,
R¹ ein Wasserstoffatom, einen Kohlenwasserstoffrest, einen Halogenkohlenwasserstoffrest, ein Halogenatom, oder eine Gruppe OR³, wobei R³ für einen Kohlenwasserstoffrest oder einen Halogenkohlenwasserstoffrest steht,
R² einen Kohlenwasserstoffrest oder einen Halogenkohlenwasserstoffrest,
a null oder eine ganze Zahl sowie
b eine ganze Zahl bedeutet,
zu einem festen Reaktionsprodukt umsetzt und
(2) Propylen gegebenfalls zusammen mit Ethylen in Gegenwart eines Katalysatorsystems, umfassend das in Schritt 1 gebildete feste Reaktionsprodukt zusammen mit:
(i) einer organischen Verbindung des Aluminiums und/oder eines Metalls der Gruppe IIa des Periodensystems und
(ii) einer Lewisbasischen Verbindung, bei der es sich um eine organische Siliziumverbindung mit einer oder mehreren Si-OR⁴-, Si-OCOR⁴- oder Si-NR⁴-Bindungen handelt,
wobei
R⁴ einen Kohlenwasserstoffrest, der durch Halogenatome und/oder Oxykohlenwasserstoffgruppen ein- oder mehrfach substituiert sein kann, bedeutet,
polymerisiert.

## Revendications

1. Catalyseur de polymérisation, comprenant
A) le produit de réaction solide
i) d'un composé d'un métal de transition du groupe IVA, VA ou VIA de la classification périodique, avec
ii) un composé du magnésium de formule générale
Mgₓ[R(COO)_{y}]_{z}
dans laquelle
R contient un groupement cyclique qui comprend un noyau aromatique ou hétérocyclique, et
x, y et z sont des nombres entiers tels que $\text{yz = 2x}$ , et
iii) une base de Lewis (I) de formule générale
R¹ₐ Ar (COOR²)_{b}
dans laquelle
Ar est un résidu d'un hydrocarbure aromatique,
R¹ est un atome d'hydrogène, un radical hydrocarboné, un radical hydrocarboné halogéné, un atome d'halogène ou un groupement OR³, R³ étant un radical hydrocarboné ou un radical hydrocarboné halogéné,
R² est un radical hydrocarboné ou un radical hydrocarboné halogéné;
a est mis pour 0 ou pour un nombre entier;
b est un nombre entier;
B) un composé organique de l'aluminium et/ou d'un métal du groupe IIA de la classification périodique; et
C) un composé de base de Lewis qui est un composé organique du silicium contenant une ou plusieurs liaisons Si-OR⁴, Si-OCOR⁴ ou Si-NR⁴,
R⁴ étant un radical hydrocarboné qui peut être substitué par un ou plusieurs atomes d'halogène et/ou groupements oxyhydrocarbonés.

2. Catalyseur selon la revendication 1, dans lequel R est un groupement phényle ou phényle substitué.

3. Catalyseur selon la revendication 1 ou 2, dans lequel R est un groupement alkyl- ou alcoxyphényle à 1-4 atomes de carbone dans la partie alkyle ou alcoxy, ou un groupement hydroxyphényle.

4. Catalyseur selon l'une quelconque des revendications 1 à 3, dans lequel le composé de métal de transition est le tétrachlorure de titane.

5. Catalyseur selon l'une quelconque des revendications 1 à 4, dans lequel la base de Lewis (I) est un diester d'acide phtalique.

6. Catalyseur selon l'une quelconque des revendications 1 à 5, dans lequel le composant (B) est un composé organique de l'aluminium.

7. Catalyseur selon l'une quelconque des revendications 1 à 6, plans lequel le composant (B) est aluminiumtriéthyl.

8. Procédé de préparation d'un catalyseur selon l'une quelconque des revendications 1 à 7, qui comprend les opérations consistant à former une composition de metal de transition (A) du catalyseur en faisant réagir, à une température d'au moins 50°C.
i) un compose d'un métal de transition du groupe IVA, VA ou VIA de la classification périodique,
ii) un composé du magnésium de formule générale
Mgₓ[R(COO)_{y}]_{z}
dans laquelle
R contient un groupement cyclique qui comprend un noyau aromatique ou hétérocyclique; et
x, y et z sont des nombres entiers tels que $\text{yz = 2x}$ , et
iii) une base de Lewis (I) de formule générale
R¹ₐ Ar (COOR²)_{b}
dans laquelle
Ar est un résidu d'un hydrocarbure aromatique,
R¹ est un atome d'hydrogène, un radical hydrocarboné, un radical hydrocarboné halogéné, un atome d'halogène ou un groupement OR³, R³ étant un radical hydrocarboné ou un radical hydrocarboné halogéné,
R² est un radical hydrocarboné ou un radical hydrocarboné halogéné;
a est mis pour 0 ou pour un nombre entier;
b est un nombre entier;
et à combiner le composant solide (A) ainsi formé avec les composants (B) et (C), tels que définis dans l'une quelconque des revendications 1 à 7.

9. Procédé de préparation d'un polymère ou d'un copolymère d'un monomère insaturé, dans lequel au moins un monomère hydrocarboné à insaturation éthylénique est mis en contact, dans des conditions de polymérisation, avec un catalyseur de polymérisation selon l'une quelconque des revendications 1 à 7.

10. Procédé selon la revendication 9, dans lequel le monomère à insaturation éthylénique répond à la formule
CH₂=CHR⁵
dans laquelle
R⁵ est un atome d'hydrogène ou un radical hydrocarboné.

11. Procédé selon la revendication 10, dans lequel le monomère à insaturation éthylénique est le propylène.

12. Procédé de fabrication de polypropylène, comprenant les opérations consistant
(1) à faire reagir, à une température d'au moins 50°C,
i) un composé d'un métal de transition du groupe IVA, VA ou VIA de la classification périodique,
ii) un composé du magnesium de formule générale
Mgₓ[R(COO)_{y}]_{z}
dans laquelle
R contient un groupement cyclique qui comprend un noyau aromatique ou hétérocyclique; et
x, y et z sont des nombres entiers tels que $\text{yz = 2x}$ , et
iii) une base de Lewis (I) de formule générale
R¹ₐ Ar (COOR²)_{b}
dans laquelle
Ar est un résidu d'un hydrocarbure aromatique,
R¹ est un atome d'hydrogène, un radical hydrocarboné, un radical hydrocarboné halogéné, un atome d'halogène ou un groupement OR³, R³ etant un radical hydrocarboné ou un radical hydrocarboné halogéné,
R² est un radical hydrocarboné ou un radical hydrocarboné halogéné;
a est mis pour 0 ou pour un nombre entier;
b est un nombre entier,
pour former un produit de réaction solide, et
(2) a polymériser du propylène, éventuellement avec de l'éthyléne, en présence d'un système catalytique qui est le produit de reaction solide forme dans l'étape 1 en combinaison avec
i) un composé organique de l'aluminium et/ou d'un métal du groupe IIA de la classification périodique; et
ii)) un composé de base de Lewis qui est un composé organique du silicium contenant une ou plusieurs liaisons Si-OR⁴, Si-OCOR⁴ ou Si-NR⁴,
R⁴ étant un radical hydrocarboné qui peut être substitué par un ou plusieurs atomes d'halogène et/ou groupements oxyhydrocarbonés.
